# EUROPÄISCHE PATENTSCHRIFT

(11) **EP 2 192 057 B1**
(45) Veröffentlichungstag und Bekanntmachung des Hinweises auf die Patenterteilung: **05.06.2013**
(21) Anmeldenummer: 09175051.3
(22) Anmeldetag: 04.11.2009
(51) Int. Cl.: B65G 11/02, B65G 21/20

(54) **Vorrichtung zum Transportieren von Produkten**
Device for transporting products
Dispositif de transport de produits

(30) Priorität: 26.11.2008 DE 102008059080
(43) Veröffentlichungstag der Anmeldung: 02.06.2010
(73) Patentinhaber: Heidelberger Druckmaschinen AG, 69115 Heidelberg (DE)
(72) Erfinder: Sommerer, Frank, 04288, Leipzig (DE); Werner, Jörg, 04757, Oschatz (DE); Brünner, Torsten, 04451, Borsdorf (DE)

(56) Entgegenhaltungen:
- DE-A1- 1 456 539
- DE-A1- 3 010 007
- DE-U1- 29 700 107
- US-A- 5 788 090
- US-A1- 2008 203 109

## Beschreibung

Die Erfindung betrifft eine Vorrichtung zum Transportieren von Produkten gemäß dem Oberbegriff von Anspruch 1.

Die Herstellung von klebegebundenen Büchern und Broschuren geschieht in mehreren Verfahrensschritten. In einem ersten Schritt werden die bedruckten Bogen in einer Falzmaschine gefalzt, in einem zweiten Schritt werden die Falzbogen in einer Zusammentragmaschine zusammengetragen und es werden Rohblöcke gebildet und in einem dritten Schritt wird ein jeweiliger Rohblock in einem Klebebinder an seiner Rückenfläche zu einem Buchblock verklebt und mit einem Umschlag versehen. In einem letzten Schritt erfolgt der Dreiseitenbeschnitt des Buchblocks. Häufig wird ein "Rohblock" auch bereits als "Buchblock" bezeichnet. Dieses Verständnis gilt auch nachfolgend.

Zum Transport von in einer Zusammentragmaschine zusammengetragenen Signaturen oder Buchblöcken zu einem Klebebinder kommen verschiedenartige Transportvorrichtungen zum Einsatz. Die DE 40 12 084 A1 zeigt einen Buchblocktransportkanal, in dem die Buchblöcke aufrecht stehend transportiert werden können. In dem Buchblocktransportkanal läuft ein Förderer mit Mitnehmern, welche die Buchblöcke durch den Transportkanal schieben. Die Breite des Buchblocktransportkanals ist an die Produktbreite anpassbar.

Aus der DE 196 48 173 A1 geht eine Vorrichtung zum Fördern von Druckprodukten, wie Druckbogenstapel hervor. Die Produkte werden von einer sie zwischen sich einklemmenden Riemenförderbahn transportiert, welche aus gegeneinander wirkenden Riemenförderern besteht. Der Abstand der Trume der Riemenförderer ist an die Dicke der zu transportierenden Produkte anpassbar. Hierbei werden die Produkte liegend transportiert.

Gemäß der EP 1 491 478 A1 werden zusammengetragene Druckprodukte in einer Zusammentragmaschine liegend durch einen Transportkanal transportiert. Eine Ausschleuseinrichtung dient dazu, einzelne Blöcke von zusammengetragenen Produkten aus dem Transportkanal auszuschleusen. Dazu befindet sich im Boden des Transportkanals eine Öffnung mit einer Klappe, die nach unten und hinten verschwenkbar ist.

Häufig werden zusammengetragene Produkte in einer Zusammentragmaschine liegend transportiert, anschließend in die Senkrechte aufgerichtet, stehend weiter transportiert und an die Klammern eines Klebebinders übergeben. Als Beitrag zur Qualitätssicherung ist es sinnvoll, die Buchblöcke kurz vor Übergabe an die Klammern des Klebebinders zu überprüfen. Dies geschieht üblicherweise bereits in der Zusammentragmaschine durch eine Bogenkontrolle oder im Verlauf des Weitertransports durch eine Dickenmessung des Produktes. Bei einer Abweichung der Produktdicke von der Solldicke muss die Möglichkeit bestehen, den fehlerhaften Buchblock auszuschleusen. Hierbei ist wichtig, dass die Weiche eine schnelle Umschaltung ermöglicht und dass auch ausgeschleuste Produkte sicher weitertransportiert werden.
Eine solche Vorrichtung zum Transportieren von Produkten, wie Blattstapeln, zusammengetragenen Signaturen, Buchblöcken oder dergleichen wird in der DE 10 2007 039 378 beschrieben (Dokument gemäß Artikel 54(3) EPÜ). Sie besitzt einen Transportkanal zum stehenden Transport der Produkte. Die Breite des Transportkanals ist an die Produktdicke anpassbar. Dazu besitzt die Vorrichtung eine Einrichtung zur Bestimmung der Produktdicke. Vorteilhafter Weise wird die Breite des Transportkanals automatisch an die Produktdicke angepasst. Die Vorrichtung zum Transportieren besitzt weiter eine Ausschleuseinrichtung, welche eine kanalartig ausgeführte Weiche aufweist. Die Weiche ist so ausgeführt, dass sich diese direkt an den Transportkanal anschließt. Die Einrichtung zur Bestimmung der Produktdicke kann auch innerhalb der Ausschleuseinrichtung in Transportrichtung stromaufwärts der mindestens einen Weiche in unmittelbarer Nähe der Weiche angebracht sein, beispielsweise als berührungslos arbeitender optischer Dickensensor. Die Einrichtung zur Bestimmung der Produktdicke dient auch der Bestimmung der tatsächlichen Produktdicke eines jeweiligen Produktes und damit der Vollständigkeitskontrolle des Produktes.
Die Weiche der Ausschleuseinrichtung ist schaltbar, so dass ein Produkt entweder geradlinig weiter durch den Transportkanal transportiert werden oder ausgeschleust werden kann, z.B. dann wenn das Produkt unvollständig ist. Die Breite der Kanäle der Weiche ist ebenso wie die Breite des Transportkanals an die Produktdicke anpassbar.

An die eine Weiche der Ausschleuseinrichtung schließt sich eine Produktauslage an. Die Produktauslage kann dabei als Stapelauslage ausgeführt sein, beispielsweise als sogenannte Criss-Cross-Auslage. Werden die Produkte beispielsweise von einer Zusammentragmaschine kommend über die Vorrichtung zum Transportieren der Produkte an einen Klebebinder weitergegeben, so können die Produkte in der Stapelauslage ausgelegt werden. Dies ist besonders dann vorteilhaft, wenn die Zusammentragmaschine mit einer höheren Geschwindigkeit als der Klebebinder betrieben wird. Wird die Zusammentragmaschine beispielsweise mit der doppelten Geschwindigkeit des Klebebinders betrieben, so kann in der Stapelauslage jedes zweite zusammengetragene Produkt ausgelegt werden. Die Stapelauslage kann auch weiter eingesetzt werden, wenn der Klebebinder aufgrund eines Fehlers abgeschaltet werden muss. Die Zusammentragmaschine kann dann weiterbetrieben werden und die Produkte können in der Stapelauslage ausgelegt werden. Die Auslage kann alternativ auch als Makulaturauslage ausgeführt sein. Dabei handelt es sich im einfachsten Fall um einen Container, welcher die fehlerhaften Produkte aufnimmt.

Im Wesentlichen ist ein Buchkanal bzw. Buchblocktransportkanal aus Kanalboden, fester Seite und auf Produktdicke verstellbare Seite aufgebaut. Bei einem geraden Kanal ist die Gestaltung des Übergangs zwischen Kanalboden und verstellbarer Seite relativ einfach. Man arbeitet hier mit sehr kleinen Spaltmaßen, um ein Einklemmen von Signaturen, welche einen Buchblock bilden, zu verhindern.

Bei einem verdrehten Teilstück des Buchkanals, wie er beim Kippen des Bogenstromes aus der Senkrechten in eine z.B. 75° Schräglage erforderlich ist, ist die Realisierung eines sehr kleinen Spaltmaßes bisher nicht mit ausreichender Sicherheit möglich , so dass es an dieser Stelle zum Einklemmen von Signaturen und damit zu Stoppern kommen kann.

US 2008/0203109 A1 offenbart eine Vorrichtung zum Transportieren von Produkten gemäss dem Oberbegriff des Anspruchs 1. In dieser Vorrichtung gibt es aber die Möglichkeit, ein Produkt sich zwischen Kanalboden und verstellbarer Kanalseite einzuklemmen.

Aufgabe der vorliegenden Erfindung ist es deshalb, eine Vorrichtung zum Transportieren zu schaffen, in der die Produkte sicher transportiert werden können.

Gelöst wird diese Aufgabe durch eine Vorrichtung zum Transportieren gemäß den kennzeichnenden Merkmalen von Anspruch 1.

Die Erfindung bezieht sich auf ein in der Längsachse verdrehtes Teilstück des Transportkanals einer Zusammentragmaschine. Ein erfindungsgemäßer Transportkanal kann auch in anderen buchblockbearbeitenden Maschinen vorteilhaft eingesetzt werden. Bei der Erfindung wird im Gegensatz zum Stand der Technik nicht versucht, ein sehr kleines Spaltmaß zwischen Kanalboden und verstellbarer Kanalseite zu erzielen, sondern durch ein Kämmen bzw. Ineinandergreifen der Teile von Kanalboden und fester Kanalseite sowie verstellbarer Kanalseite gar keinen Spalt entstehen zu lassen. Dadurch wird dem zu transportierendem Produkt keine Möglichkeit gegeben, sich zwischen Kanalboden und verstellbarer Kanalseite einzuklemmen.

In anderen Worten: Der Kanalboden des Transportkanals weist eine profilierte Oberfläche und die Kanalwände weisen eine profilierte Unterkante auf.

Die erfindungsgemäße Transportvorrichtung hat folgende Vorteile:
- einfache, kostengünstige und sicher funktionierende Lösung gegenüber den Stand der Technik
- durch eine Verringerung der Stopperhäufigkeit kann eine höhere Verfügbarkeit und damit ein höherer Kundennutzen erzielt werden
- geringerer Montageaufwand, da keine Feinjustierung der Führungen notwendig.

Hinsichtlich weiterer vorteilhafter Ausgestaltungen der Erfindung wird auf die Beschreibung eines Ausführungsbeispiels unter Bezugnahme auf die beiliegende Zeichnungen verwiesen.

Die Erfindung soll anhand eines Ausführungsbeispiels noch näher erläutert werden. Es zeigen in schematischer Darstellung
- Fig. 1: einen Klebebinder mit Zusammentragmaschine
- Fig. 2: einen Transportkanal zwischen Zusammentragmaschine und Klebebinder
- Fig. 3: einen erfindungsgemäßen Transportkanal einer Vorrichtung zum Transportieren

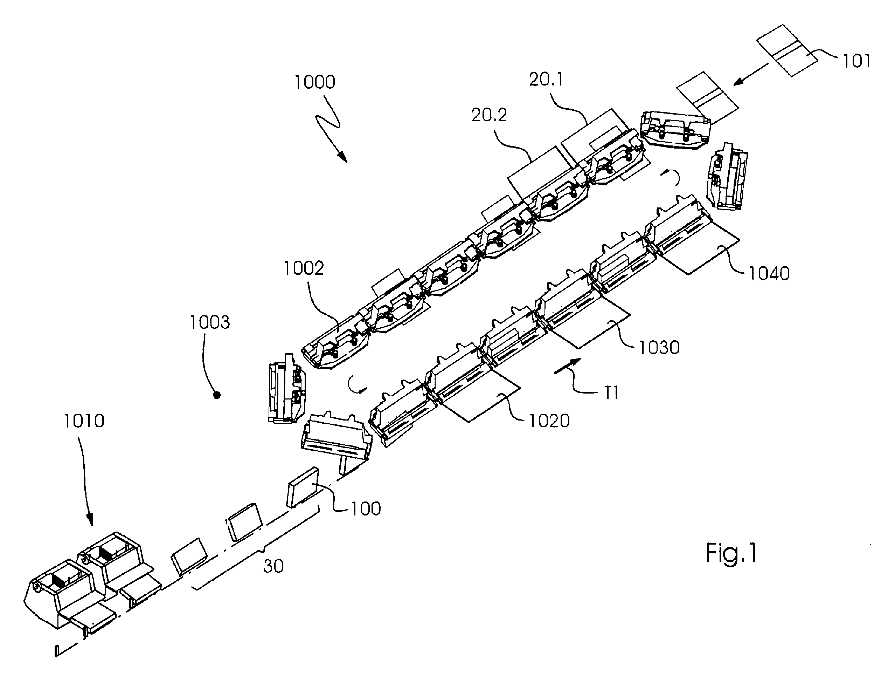

Fig. 1 zeigt einen Ausschnitt aus einem Klebebinder 1000 mit Buchblocktransportsystems, welches durch angetriebene Klammern 1002 gebildet wird. Buchblöcke 100 werden von der Zusammentragmaschine 1010 kommend in Transportrichtung T 1 durch einen Buchblockkanal 30 dem Klebebinder 1000 zugeführt. Werden die Buchblöcke 100 in der Zusammentragmaschine 1010 liegend zusammengetragen, so müssen sie im Bereich des Buchblockkanals 30 aufgerichtet werden. Werden die Buchblöcke 100 in der Zusammentragmaschine 1010 bereits stehend zusammengetragen, so werden die Buchblöcke 100 stehend durch den Buchblockkanal 30 geschoben. Die Buchblöcke 100 werden von Klammern 1002 ergriffen und zu einer ersten Bearbeitungsstation, einer Rückenbearbeitungsstation 1020, transportiert. Dabei dient in dem dargestellten Klebebinder 1000 nur jede zweite Klammer 1002 dem Transport eines Buchblocks 100, in anderen Worten: Jede zweite Klammer 1002 fährt leer. Dies ist nur als eine beispielhafte Betriebsweise des Klebebinders 100 zu verstehen. Selbstverständlich kann auch jede Klammer 1002 zum Transport je eines Buchblocks 100 genutzt werden.
Die Rückenbearbeitungsstation 1020 kann mehrere nicht dargestellte Bearbeitungswerkzeuge besitzen. Der an seinem Rücken bearbeitete Buchblock 100 wird weiter zu einer Leimauftragsstation 1030 transportiert und mit Klebstoff versehen. In einer nachfolgenden Fälzelstation 1040 kann ein Fälzel aufgebracht werden. Von einem Umschlaganleger 20.1 werden Umschläge 101 an die Buchblöcke 100 angelegt und in der Anpressstation 20.2 angedrückt und miteinander verbunden. Anschließend werden die Buchblöcke 100 durch ein separates Transportsystem weiter durch eine Kühlstrecke und zum Dreiseitenbeschnitt 1003 transportiert.

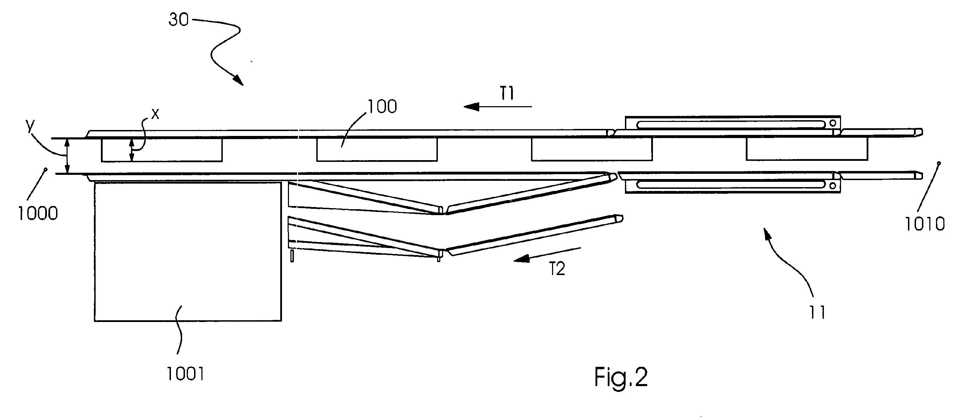

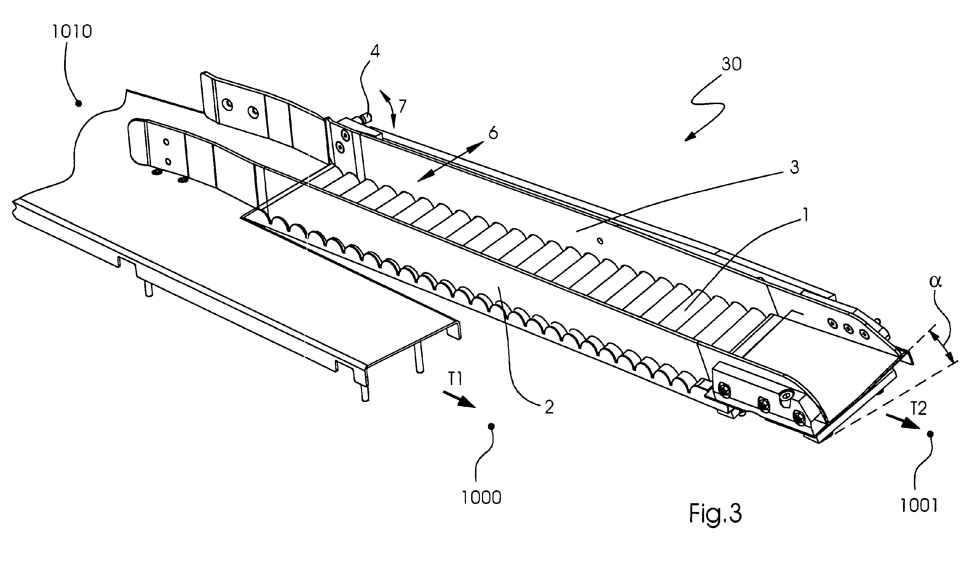

Fig. 2 zeigt einen Buchkanal 30 in einer schematischen Darstellung. In dieser Ausführungsform ist die Breite y des Buchkanals 30 an die Dicke x eines Produktes 100 anpassbar.
Von einer Zusammentragmaschine 1010 kommend können Produkte 100 entweder in Transportrichtung T1 weiter zu einem Klebebinder 1000 oder in Transportrichtung T2 weiter zu einer Auslage 1001 transportiert werden. Zum Ändern der Transportrichtung, d.h. zum Ausschleusen von Produkten 100, ist eine Weiche 11 vorgesehen. Die Ausführung des Buchkanals 30 ist in Fig. 3 näher dargestellt.

Fig. 3 zeigt einen Ausschnitt einer Vorrichtung zum Transportieren mit einem BuchblockTransportkanal 30. Produkte 100, wie beispielsweise zusammengetragene Broschuren oder Buchblöcke werden von einer Zusammentragmaschine 1010 kommend in Transportrichtung T2 durch den Transportkanal 30 weiter zu einer nicht dargestellten Fehlbogenauslage oder Criss-Cross-Auslage 1001 transportiert. Die Breite des Transportkanals 30 ist veränderbar und lässt sich an die Produktdicke der Produkte 100 anpassen. Durch eine in Fig. 2 nicht dargestellte Weiche 11 kann ein Produkt 100 auch in Transportrichtung T1 weiter zu einem Klebebinder 1000 transportiert werden.

Der Buchkanal 30 wird in Produktlaufrichtung T2 aus einer senkrechten Lage in eine 15° Schräglage verdreht. Dabei muss die Verstellbarkeit 6 der verstellbaren Kanalseite 3 senkrecht zur Produktlaufrichtung T2 gewährleistet sein. Durch die Verdrehung des Kanals liegt der Kanalboden 1 nicht mehr in einer Ebene, sondern er geht von einer ebenen Lage in eine Schräglage über. Dadurch führt die verstellbare Kanalseite 3 bei der Verstellbewegung 6 zusätzlich eine Drehbewegung 7 mit einem Drehwinkel α um den Drehpunkt 4 aus. In diesem verdrehten Kanalstück soll wie im senkrechten Kanal auch, kein bzw. nur ein sehr kleinen Spalt zwischen dem Kanalboden 1 und der festen Kanalseite 2 sowie der verstellbaren Kanalseite 3 entstehen.
Dazu wurden erfindungsgemäß die Teile des Buchkanals 30 derart gestaltet, dass sie über eine Art abgerundete Verzahnung verfügen und so ineinander eingreifen können, dass sich kein Spalt zwischen Kanalboden 1 und fester Kanalseite 2 sowie zwischen Kanalboden 1 und dem gesamten Verstellbereich 6 der verstellbaren Kanalseite 3 bilden kann.
Der Kanalboden 1 hat eine gewellte Form, welche einer Aneinanderreihung von Zylinderhälften gleicht. Die Seitenwände 2, 3 des Kanals 30 weisen ebenfalls eine gewellte Form auf, welche mit der Form des Kanalbodens kämmt. Alternativ können Kanalboden 1 und Seiten 2, 3 statt der abgerundeten Verzahnung auch eine spitze Verzahnung aufweisen. In alternativen Ausführungsformen könnte auch eine verdrehbare Rollenbahn für den Kanalboden, eine anders gewellte Form, z.B. eine sinusförmige Wellung oder eine Aneinanderreihung von Ellipsenhälften, eine symmetrische oder unsymmetrische Sägezahnform oder eine Rechteckzahnform zum Einsatz kommen.

Oberhalb der Seitenwände 2, 3 werden nicht dargestellte Mitnehmerelemente bewegt, welche einen jeweiligen Buchblock 100 vor sich herschieben. Oberhalb der Seitenwände 2, 3 befinden sich weitere nicht dargestellte Seitenflächenelemente zur Führung eines jeweiligen Buchblocks 100.

## Patentansprüche

1. Vorrichtung zum Transportieren von Produkten (100), wie Blattstapeln, zusammengetragenen Signaturen, Buchblöcken oder dergleichen, insbesondere in einer Zusammentragmaschine, einem Klebebinder oder einer Fadensiegelmaschine, wobei die Vorrichtung einen Transportkanal (30) zum Transport der Produkte (100) besitzt, dessen Breite an die Produktdicke anpassbar ist, wobei die Vorrichtung einen Kanalboden (1) und zwei Kanalseitenwände (2, 3) aufweist, wovon mindestens eine verstellbar ist,
**dadurch gekennzeichnet,**
**dass** der Kanalboden (1) eine profilierte Oberfläche aufweist und die Kanalseitenwände (2, 3) jeweils eine profilierte Unterkante aufweisen, wobei der Kanalboden (1) und die Kanalseitenwände (2, 3) miteinander kämmen.

2. Vorrichtung zum Transportieren nach Anspruch 1,
**dadurch gekennzeichnet,**
**dass** die profilierte Oberfläche des Kanalbodens (1) als eine gewellte oder geriffelte oder gezackte oder gezahnte Oberfläche ausgeführt ist und die profilierte Unterkante der Kanalseitenwände (2, 3) jeweils als eine komplementär gewellte oder geriffelte oder gezackte oder gezahnte Kante ausgeführt ist.

3. Vorrichtung zum Transportieren nach Anspruch 2,
**dadurch gekennzeichnet,**
**dass** die höchstgelegenen Punkte der gewellten oder geriffelten oder gezackten Oberfläche des Kanalbodens (1) eine Auflage für einen zu transportierenden Buchblock (100) bilden.

4. Vorrichtung zum Transportieren nach einem der vorangehenden Ansprüche,
**dadurch gekennzeichnet,**
**dass** der Kanalboden (1) und die Kanalseitenwände (2, 3) um die Längsachse des Transportkanals (30) verdreht sind.

## Claims

1. Device for transporting products (100) such as stacks of sheets, collated signatures, book blocks or the like, in particular in a collating machine, a folder-gluer, or a thread-sealing machine, the device including a transport channel (30) for transporting the products (100), the width of the transport channel (30) being adaptable to the thickness of the products, and the device including a channel bottom (1) and two channel side walls (2, 3), at least one of which is adjustable,
**characterized in**
**that** the channel bottom (1) includes a profiled surface and each of the channel side walls (2, 3) has a profiled bottom edge, the channel bottom (1) and the channel side walls (2, 3) meshing with each other.

2. Device for transporting according to Claim 1,
**characterized in**
**that** the profiled surface of the channel bottom (1) is a corrugated, grooved, serrated, or toothed surface and each of the profiled bottom edges the of the channel side walls (2, 3) is designed as an edge that is corrugated, grooved, serrated, or toothed in a complementary way.

3. Device for transporting according to Claim 2,
**characterized in**
**that** the highest points of the corrugated, grooved, or serrated surface of the channel bottom (1) form a support for a book block (100) to be transported.

4. Device for transporting according to one of the preceding claims,
**characterized in**
**that** the channel bottom (1) and the channel side walls (2, 3) are rotated about the longitudinal axis of the transport channel (30).

## Revendications

1. Dispositif pour le transport de produits (100), tels que des piles de feuilles, des signatures assemblées, des blocs de livre ou similaire, en particulier dans une machine assembleuse, une relieuse par collage ou une machine par thermocouture, le dispositif présentant un canal de transport (20) pour le transport des produits (100), dont la largeur est adaptée à l'épaisseur du produit, le dispositif présentant un fond de canal (1) et deux parois latérales de canal (2, 3) dont au moins une est réglable,
**caractérisé en ce que**
le fond de canal (1) présente une surface profilée et les parois latérales de canal (2, 3) présentent respectivement un bord inférieur profilé, le fond de canal (1) et les parois latérales de canal (2, 3) s'enclenchant entre elles.

2. Dispositif pour le transport selon la revendication 1,
**caractérisé en ce que**
la surface profilée du fond de canal (1) est réalisée comme une surface ondulée, cannelée, dentelée ou dentée et le bord inférieur profilé des parois latérales de canal (2, 3) est réalisé respectivement comme bord complémentaire ondulé, ou cannelé, dentelé ou denté.

3. Dispositif pour le transport selon la revendication 2,
**caractérisé en ce que** les points les plus élevés de la surface ondulée, cannelée, dentelée ou dentée du fond de canal (1) forment un support pour un bloc de livre (100) à transporter.

4. Dispositif pour le transport selon l'une des revendications précédentes, **caractérisé en ce que**
le fond de canal (1) et les parois latérales de canal (2, 3) sont tournes autour de l'axe longitudinal du canal de transport (30).
